(19) Europäisches Patentamt
European Patent Office
Office européen des brevets

(11) **EP 1 263 163 B1**

(12) **FASCICULE DE BREVET EUROPEEN**

(45) Date de publication et mention
de la délivrance du brevet:
**26.07.2006 Bulletin 2006/30**

(51) Int Cl.:
***H04L 9/06*** (2006.01)

(21) Numéro de dépôt: **02290908.9**

(22) Date de dépôt: **11.04.2002**

(54) **Procédé fondé sur un algorithme de chiffrage par bloc a répétition de rondes et dispositif le mettant en oeuvre**

Auf einem Blockverschlüsselungsalgorithmus mit Rundenwiederholung basiertes Verfahren und Vorrichtung zur Ausführung des Verfahrens

Method based on a block ciphering algorithm with round repetition and system for implementing said method

(84) Etats contractants désignés:
**DE ES FR GB IT**

(30) Priorité: **31.05.2001 FR 0107163**

(43) Date de publication de la demande:
**04.12.2002 Bulletin 2002/49**

(73) Titulaire: **SAGEM Défense Sécurité**
**75015 Paris (FR)**

(72) Inventeur: **Chabanne, Hervé**
**78200 Mantes la Jolie (FR)**

(74) Mandataire: **Gorrée, Jean-Michel**
**Cabinet Plasseraud**
**65/67 rue de la Victoire**
**75440 Paris Cedex 09 (FR)**

(56) Documents cités:
**EP-A- 1 052 801**

## Description

La présente invention concerne des perfectionnements apportés aux procédés - et aux dispositifs le mettant en oeuvre - fondés sur un algorithme de chiffrage par bloc à répétition de ronde, propre à fournir, à partir d'une donnée d'entrée de longueur déterminée, un cryptogramme ou donnée de sortie qui dépend de la donnée d'entrée et d'une clé mémorisée inaccessible en lecture depuis l'extérieur.

Pour fixer les idées, les perfectionnements que l'invention vise à apporter peuvent concerner des algorithmes à répétition de rondes involutives - tels que l'algorithme DES (Data Encryption Standard, couramment utilisé dans les cartes à puce pour établir un cryptogramme à partir d'une donnée d'entrée de 8 octets et d'une clé maître de 56 éléments binaires ou bits utiles) ou l'algorithme KASUMI (aussi dénommé MISTY) - ou des algorithmes à répétition de rondes non involutives - tel que l'algorithme AES -.

Parmi les divers types d'attaque qui peuvent être menés contre des moyens algorithmes, l'attaque DFA (Differential Fault Analysis) consiste à provoquer des erreurs durant l'exécution d'un algorithme cryptographique, puis à comparer les résultats obtenus

- d'une part, lorsque les calculs ont été exécutés correctement et
- d'autre part, lorsque les calculs ont été exécutés avec des erreurs,

et enfin à déduire de cette comparaison la clé utilisée.

Cette attaque - lorsque sa mise en oeuvre est possible - est relativement efficace car elle permet en quelques dizaines d'appels à l'algorithme de retrouver la clé utilisée. Elle est souvent mise en oeuvre contre des algorithmes DES implémentés dans des cartes à microcircuit (cartes à puce).

Le document EP 1 052 801 A2 divulgue un procédé de mise en oeuvre d'algorithmes cryptographiques selon lequel, pour accroître la sécurité en cas de violation, on met en oeuvre, avec l'algorithme, des fonctions qui, dans le déroulement de l'algorithme, entraînent l'exécution d'opérations supplémentaire, par le biais desquelles le déroulement temporel de l'algorithme se modifie chaque fois de façon aléatoire ou de façon commandée pseudo-aléatoirement, mais le résultat du codage n'est pas influencé, de sorte que, pour les opérations supplémentaires, il s'agit d'opérations sans résultat ou de sorte que les résultats découlant de la réalisation d'opérations mathématiques supplémentaires ne sont pas traités ultérieurement, qu'ils s'annulent à l'égard du résultat de codage ou qu'ils ne constituent que la base pour la fixation du nombre et/ou de la séquence d'autres opérations ou de la séquence temporelle d'étapes partielles permutables de l'algorithme sans incidence sur le résultat du codage.

L'inconvénient de ce procédé connu réside dans la modification - aléatoire ou pseudo-aléatoire - du déroulement temporel de l'algorithme. Or l'incertitude relative à ce paramètre de mise en oeuvre peut être inacceptable dans le cas d'applications dans lesquelles la maîtrise de tous les paramètres - y compris le déroulement temporel - de fonctionnement de l'algorithme est requise.

L'invention a essentiellement pour but de proposer des moyens - procédé et dispositif - perfectionnés propres à procurer une protection contre ce type d'attaque DFA.

A cette fin, selon un premier de ses aspects, l'invention propose un procédé fondé sur un algorithme de chiffrage à répétition de rondes mettant en oeuvre un nombre donné de rondes, utilisant une clé maître à partir de laquelle sont générées une ou des sous-clés qui sont injectées dans les rondes, lequel procédé, étant conforme à l'invention, se caractérise en ce que l'algorithme inclut en outre au moins une paire de rondes supplémentaires constituée d'une première et d'une seconde rondes sans utilité dans le déroulement de l'algorithme et auxquelles sont affectées des sous-clés respectives et en ce qu'on donne aux rondes supplémentaires un profil analogue à celui des rondes définies par l'algorithme, ce grâce à quoi la mise en oeuvre de cette au moins une paire de rondes supplémentaires peut être rendue indétectable.

Ainsi, l'invention propose des moyens purement algorithmes pour parvenir à sécuriser le déroulement de l'algorithme de chiffrage. L'introduction d'une paire de rondes supplémentaires ne pose, dans le principe, aucun problème ni pour la mise en oeuvre, ni pour le fonctionnement et l'introduction de plusieurs paires de rondes supplémentaires accroît la sécurité sans introduire de difficulté sensible.

Au cours du fonctionnement normal de l'algorithme modifié conformément à l'invention, la ou chaque paire de rondes supplémentaires introduite artificiellement dans l'algorithme est purement transparente et n'a aucune influence sur le cryptogramme obtenu en sortie. Par contre, en présence d'une attaque DFA, l'une des rondes supplémentaires risque d'être modifiée - une telle modification d'une ronde supplémentaire étant d'autant plus probable que le nombre des paires de rondes ajoutées est élevé -, tandis qu'il n'existe qu'une probabilité quasi nulle pour que les deux rondes d'une paire ajoutée soient simultanément modifiées de manière que leurs effets se compensent mutuellement : il devient alors impossible d'effectuer des comparaisons valables entre les calculs des algorithmes corrects et ceux volontairement affectés d'erreur, et l'identification de la clé devient impossible.

Les moyens proposés par l'invention se révèlent relativement simples à mettre en oeuvre, tandis que leur efficacité est élevée. Le profil des rondes supplémentaires étant analogue à celui des rondes de calcul de l'algorithme, ces rondes artificielles peuvent ne pas être décelables par des mesures du type mesure de la consommation électrique instantanée (attaque DPA : analyse différentielle de consommation). En outre, ce procédé peut être utilisé en combinaison avec la mise en oeuvre de masques tel qu'enseigné dans le document FR-A-2 802 741.

Pour éviter une complication extrême des calculs, il est souhaitable que la paire de rondes supplémentaires soit formée de deux rondes successives, de sorte que les deux rondes de l'algorithme de cryptage entre lesquelles ladite paire de rondes supplémentaires a été ajoutée se transmettent les mêmes informations que dans l'algorithme non modifié.

Dans une mise en oeuvre avantageuse du procédé de l'invention, la seconde ronde est la ronde inverse de la première ronde et il lui est affecté une sous-clé K' différente de la sous-clé K de la première ronde, mais dépendante de la sous-clé K.

Dans une mise en oeuvre spécifique, la première ronde est involutive et la même sous-clé K est affectée à la ronde et à son inverse. Dans ce cas, les dispositions de l'invention trouvent une application préférée, bien que non limitative, pour la protection de l'algorithme itératif DES, composé d'une permutation IP, de 16 rondes successives, et de l'inverse de la permutation IP.

Selon un second de ses aspects, l'invention propose de perfectionner un dispositif mettant en oeuvre un algorithme de chiffrage à répétition de rondes avec un nombre donné de rondes, utilisant une clé maître à partir de laquelle sont générées une ou des sous-clés qui sont injectées dans les rondes, lequel dispositif, étant agencé conformément à l'invention, se caractérise en ce qu'il inclut en outre des moyens pour mettre en oeuvre au moins une paire de rondes supplémentaires constituée d'une première et d'une seconde rondes sans utilité dans le déroulement de l'algorithme et auxquelles sont affectées des sous-clés respectives et en ce que les rondes supplémentaires possèdent un profil analogue à celui des rondes définies par l'algorithme, ce grâce à quoi cette au moins une paire de rondes supplémentaires peut être rendue indétectable. De préférence, la paire de rondes supplémentaires est formée de rondes successives.

On peut faire en sorte que la seconde ronde est la ronde inverse de la première ronde et qu'il lui est affecté une sous-clé K' différente de la sous-clé K de la première ronde, mais dépendante de la sous-clé K.

Lorsque cela est possible, il est avantageux que la première ronde soit involutive et que la même sous-clé K soit affectée à la ronde et à son inverse. Un tel dispositif trouve une application préférée, bien que non exclusive, dans la mise en oeuvre de l'algorithme itératif DES, composé d'une permutation IP, de 16 rondes successives, et de l'inverse de la permutation IP.

L'invention sera mieux comprise à la lecture de la description détaillée qui suit de certains modes de réalisation donnés à titre d'exemples non limitatifs. Dans cette description, on se réfère aux dessins annexés sur lesquels :

- la figure 1A illustre très schématiquement, à titre de référence, deux étapes consécutives d'un algorithme ;
- la figure 1B illustre très schématiquement la même partie de l'algorithme qu'à la figure 1 après modification conformément à l'invention ;
- la figure 2 illustre très schématiquement une partie d'un algorithme modifié selon une mise en oeuvre avantageuse des dispositions de l'invention ;
- la figure 3A illustre très schématiquement l'algorithme DES ; et
- la figure 3B illustre très schématiquement l'algorithme DES modifié selon une mise en oeuvre spécifique, préférée, de l'invention.

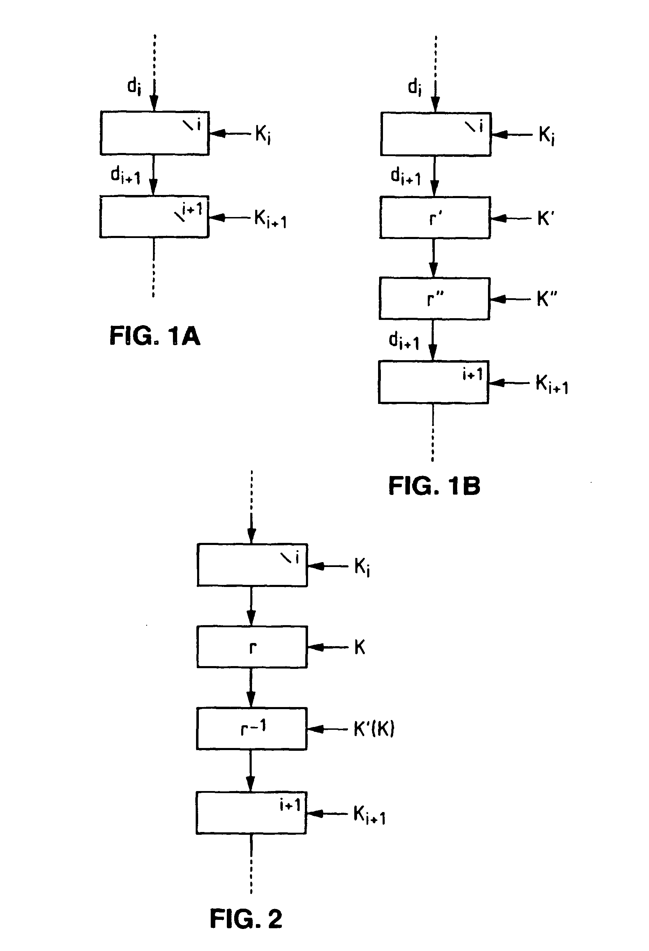

En se référant tout d'abord à la figure 1A, l'invention vise un algorithme de chiffrage à répétition de rondes utilisant une clé maître à partir de laquelle sont générées une ou des sous-clés qui sont injectées dans les rondes. A la figure 1 on a schématisé une ronde de rang i recevant des données $d_i$ (données d'entrée si la ronde est de rang 1 ; données de sortie de la ronde précédente de rang i-1 dans les autres cas) ; à cette ronde de rang i est associée une sous-clé $K_i$. La ronde de rang i délivre des données $d_{i+1}$ à destination de la ronde suivante de rang i+1 gérée par une sous-clé $K_{i+1}$.

Conformément à l'invention, on introduit dans l'algorithme au moins une paire de rondes supplémentaires r' et r", entre les rondes de rang i et i+1, les rondes r' et r" étant respectivement gérées par des sous-clés K' et K". Les rondes r' et r" sont sans utilité dans le déroulement normal de l'algorithme, les clés K' et K" sont arbitraires, et des moyens sont prévus qui sont propres à rendre indécelables la mise en oeuvre de ces deux rondes supplémentaires, notamment en présence d'une attaque DPA.

De ce fait, la ronde de rang i émet toujours des données $d_{i+1}$ et la ronde de rang i+1 reçoit toujours des données $d_{i+1}$ lorsque l'algorithme fonctionne normalement, de la même manière qu'illustré à la figure 1A. Par contre, en présence d'une attaque DFA, si une des rondes artificielles r' ou r" est modifiée, l'attaquant récupère des inconnues provenant de la sous-clé aléatoire - K' ou K" respectivement - associée à la ronde modifiée. Comme il existe une probabilité quasiment nulle pour que les deux rondes supplémentaires r' et r" soient modifiées simultanément de manière que leurs effets se compensent, le travail de cryptanalyse de l'attaquant DFA est rendu très compliqué, voire impossible.

L'efficacité des dispositions de l'invention est d'autant meilleure que le nombre de paires de rondes supplémentaires introduites dans l'algorithme est accru. On peut ainsi multiplier les paires de rondes supplémentaires introduites chacune entre deux rondes consécutives, voire introduire plusieurs paires de rondes supplémentaires successives entre deux rondes consécutives.

Toutefois, pour ne pas compliquer outre mesure le fonctionnement de l'algorithme, il est préférable de ne pas séparer les deux rondes d'une paire supplémentaire et de constituer la paire de rondes supplémentaires de deux rondes consécutives r' et r" comme illustré à la figure 1B.

Dans un mode de mise en oeuvre préféré illustré à la figure 2, la seconde ronde est la ronde inverse $r^{-1}$ de la première ronde r et il est affecté à cette ronde inverse $r^{-1}$ une sous-clé K' qui est différente de la sous-clé K de la première ronde, mais qui est dépendante de cette sous-clé K (notée K'(K) à la figure 2).

Les dispositions qui viennent d'être exposées ne tiennent pas compte du caractère involutif ou non involutif des rondes de l'algorithme et s'appliquent donc à tout algorithme de chiffrage à répétition de rondes gérées chacune par une sous-clé générée à partir d'une clé maître.

Toutefois, dans le cas où les rondes sont involutives, on peut simplifier la mise en oeuvre de l'invention en donnant la même sous-clé aléatoire K à la ronde supplémentaire r et à son inverse $r^{-1}$.

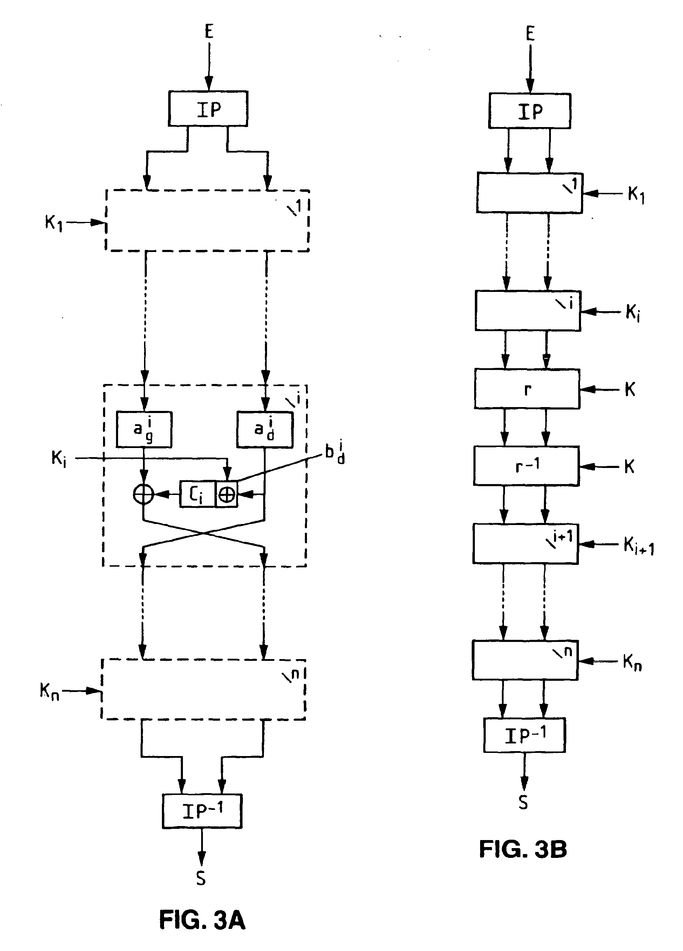

Les dispositions de l'invention qui viennent d'être exposées trouvent une application particulièrement intéressante, bien que non exclusive, dans la protection de l'algorithme DES couramment mis en oeuvre dans les cartes à puce. Comme illustré à la figure 3A, l'algorithme DES comporte un étage d'entrée constitué d'un permutateur d'entrée ou permutateur initial IP fournissant, à partir d'une donnée d'entrée E, une partie gauche de 32 bits et une partie droite de 32 bits, les 32 bits constituant des opérandes. Chaque étage i comporte :

- un élément d'expansion $a_d^i$ augmentant la taille de la partie droite,

- un ensemble $b_d^i$ ayant en cascade un opérateur ou EXCLUSIF ou XOR sur l'opérande droit expansé et une sous-clé Ki de même longueur dérivée de la clé maître et des tables de substitution ou "S boxes" $c_i$ affectées chacune à un groupe de bits et à lecture dans un ordre arbitraire,

- et un opérateur XOR di sur le contenu lu dans les tables $c_i$ et l'opérande gauche expansé $a_g^i$ pour donner naissance à une partie de gauche de 32 bits constituant la sortie de droite de l'étage, l'autre sortie - sortie de gauche - de l'étage étant constituée par l'opérande droit expansé $a_d^i$ .

L'algorithme de chiffrage DES met en oeuvre un nombre de n = 16 étages en cascade constitués comme il vient d'être expliqué, le dernier étage étant suivi d'un permutateur effectuant l'opération inverse $IP^{-1}$ et délivrant le cryptogramme de sortie S.

Conformément à l'invention, on introduit, entre les étages de rang i et i+1, une ronde r et son inverse $r^{-1}$

consécutives et gérées par la même sous-clé K aléatoire, comme illustré à la figure 3B, les rondes r et $r^{-1}$ n'ayant individuellement aucune utilité dans le déroulement de l'algorithme.

## Revendications

**1.** Procédé fondé sur un algorithme de chiffrage à répétition de rondes mettant en oeuvre un nombre donné de rondes, utilisant une clé maître à partir de laquelle sont générées une ou des sous-clés ($K_i$) qui sont injectées dans les rondes (i),
**caractérisé en ce que** l'algorithme inclut en outre au moins une paire de rondes supplémentaires constituée d'une première et d'une seconde rondes (r', r") sans utilité dans le déroulement de l'algorithme et auxquelles sont affectées des sous-clés respectives (K', K") et **en ce qu'**on donne aux rondes supplémentaires un profil analogue à celui des rondes définies par l'algorithme, ce grâce à quoi la mise en oeuvre de cette au moins une paire de rondes supplémentaires peut être rendue indétectable.

**2.** Procédé selon la revendication 1, **caractérisé en ce que** la paire de rondes supplémentaires est formée de rondes successives.

**3.** Procédé selon la revendication 1 ou 2, **caractérisé en ce que** la seconde ronde est la ronde inverse ($r^{-1}$) de la première ronde (r) et **en ce qu'**il lui est affecté une sous-clé (K') différente de la sous-clé (K) de la première ronde, mais dépendante de la sous-clé (K).

**4.** Procédé selon la revendication 4, **caractérisé en ce que** la première ronde est involutive et **en ce que** la même sous-clé (K) est affectée à la ronde et à son inverse.

**5.** Procédé selon la revendication 4, **caractérisé en ce que** l'algorithme de chiffrage est l'algorithme itératif DES, composé d'une permutation IP, de 16 rondes successives, et de l'inverse de la permutation IP.

**6.** Dispositif mettant en oeuvre un algorithme de chiffrage à répétition de rondes avec un nombre donné de rondes, utilisant une clé maître à partir de laquelle sont générées une ou des sous-clés ($K_i$) qui sont injectées dans les rondes (i),
**caractérisé en ce que** le dispositif inclut en outre des moyens pour mettre en oeuvre au moins une paire de rondes supplémentaires constituée d'une première et d'une seconde rondes (r', r") sans utilité dans le déroulement de l'algorithme et auxquelles sont affectées des sous-clés respectives (K', K") et **en ce que** les rondes supplémentaires possèdent un profil analogue à celui des rondes définies par l'algorithme, ce grâce à quoi cette au moins une paire de rondes supplémentaires peut être rendue indétectable.

**7.** Dispositif selon la revendication 6, **caractérisé en ce que** la paire de rondes supplémentaires est formée de rondes successives.

**8.** Dispositif selon la revendication 6 ou 7, **caractérisé en ce que** la seconde ronde est la ronde inverse $(r^{-1})$ de la première ronde $(r)$ et **en ce qu'**il lui est affecté une sous-clé $(K')$ différente de la sous-clé $(K)$ de la première ronde, mais dépendante de la sous-clé $(K)$.

**9.** Dispositif selon la revendication 8, **caractérisé en ce que** la première ronde est involutive et **en ce que** la même sous-clé $(K)$ est affectée à la ronde et à son inverse.

**10.** Dispositif selon la revendication 9, **caractérisé en ce que** l'algorithme de chiffrage est l'algorithme itératif DES, composé d'une permutation IP, de 16 rondes successives, et de l'inverse de la permutation IP.

## Claims

**1.** Method based on a round repetition encryption algorithm executing a given number of rounds, using a master key from which there are generated one or more subkeys $(K_i)$ which are injected in the rounds (i), **characterised in that** the algorithm additionally includes at least one pair of additional rounds formed by a first and a second round $(r', r'')$ that are of no use in the running of the algorithm and to which there are assigned respective subkeys $(K', K'')$, and **in that** the additional rounds are given a profile similar to that of the rounds defined by the algorithm, by virtue of which the execution of this at least one pair of additional rounds can be made undetectable.

**2.** Method according to Claim 1, **characterised in that** the pair of additional rounds is formed by successive rounds.

**3.** Method according to Claim 1 or 2, **characterised in that** the second round is the inverse round $(r^{-1})$ of the first round $(r)$ and **in that** there is assigned to it a subkey $(K')$ that is different from the subkey $(K)$ of the first round, but dependent on the subkey $(K)$.

**4.** Method according to Claim 4, **characterised in that** the first round is involutive and **in that** the same subkey $(K)$ is assigned to the round and to its inverse.

**5.** Method according to Claim 4, **characterised in that** the encryption algorithm is the iterative DES algorithm, made up of an IP permutation, of 16 successive rounds, and of the inverse of the IP permutation.

**6.** Device executing a round repetition encryption algorithm with a given number of rounds, using a master key from which there are generated one or more subkeys $(K_i)$ which are injected in the rounds (i), **characterised in that** the device additionally includes means for executing at least one pair of additional rounds formed by a first and a second round $(r', r'')$ that are of no use in the running of the algorithm and to which there are assigned respective subkeys $(K', K'')$, and **in that** the additional rounds have a profile similar to that of the rounds defined by the algorithm, by virtue of which this at least one pair of additional rounds can be made undetectable.

**7.** Device according to Claim 6, **characterised in that** the pair of additional rounds is formed by successive rounds.

**8.** Device according to Claim 6 or 7, **characterised in that** the second round is the inverse round $(r^{-1})$ of the first round $(r)$ and **in that** there is assigned to it a subkey $(K')$ that is different from the subkey $(K)$ of the first round, but dependent on the subkey $(K)$.

**9.** Device according to Claim 8, **characterised in that** the first round is involutive and **in that** the same subkey $(K)$ is assigned to the round and to its inverse.

**10.** Device according to Claim 9, **characterised in that** the encryption algorithm is the iterative DES algorithm, made up of an IP permutation, of 16 successive rounds, and of the inverse of the IP permutation.

## Patentansprüche

**1.** Verfahren, basierend auf einem Verschlüsselungsalgorithmus mit Rundenwiederholungen, der eine gegebene Anzahl Runden durchführt, wobei ein Hauptschlüssel eingesetzt wird, anhand dessen ein oder mehrere Unterschlüssel $(K_i)$ erzeugt werden, die in die Runden (i) eingebracht werden, **dadurch gekennzeichnet, dass** der Algorithmus ferner wenigstens ein Paar zusätzlicher Runden umfasst, das aus einer ersten und aus einer zweiten Runde $(r', r'')$ ohne Nutzen im Ablauf des Algorithmus gebildet ist, denen jeweils Unterschlüssel $(K', K'')$ zugeordnet sind, und dass den zusätzlichen Runden ein Profil gegeben wird, das zu dem Profil der durch den Algorithmus definierten Runden analog ist, wodurch die Verwendung dieses wenigstens einen Paares zusätzlicher Runden nicht ermittelt werden kann.

**2.** Verfahren nach Anspruch 1,

**dadurch gekennzeichnet, dass** das Paar zusätzlicher Runden aus aufeinanderfolgenden Runden gebildet ist.

3. Verfahren nach Anspruch 1 oder 2,
**dadurch gekennzeichnet, dass** die zweite Runde die inverse Runde ($r^{-1}$) der ersten Runde (r) ist, und dass ihr ein Unterschlüssel (K') zugeordnet ist, der sich von dem Unterschlüssel (K) der ersten Runde unterscheidet, von dem Unterschlüssel (K) jedoch abhängt.

4. Verfahren nach Anspruch 4,
**dadurch gekennzeichnet, dass** die erste Runde involutorisch ist, und dass der Runde und ihrer Umkehrung der gleiche Unterschlüssel (K) zugeordnet ist.

5. Verfahren nach Anspruch 4,
**dadurch gekennzeichnet, dass** der Verschlüsselungsalgorithmus der iterative DES-Algorithmus ist, bestehend aus einer Permutation IP mit 16 aufeinanderfolgenden Runden und der Inversion der Permutation IP.

6. Vorrichtung, die einen Verschlüsselungsalgorithmus mit Rundenwiederholungen mit einer gegebenen Anzahl von Runden verwendet, wobei ein Hauptschlüssel eingesetzt wird, anhand dessen ein oder mehrere Unterschlüssel ($K_i$) erzeugt werden, die in die Runden (i) eingebracht werden,
**dadurch gekennzeichnet, dass** die Vorrichtung ferner Mittel umfasst, um wenigstens ein Paar zusätzlicher Runden durchzuführen, das aus einer ersten und aus einer zweiten Runde (r', r'') ohne Nutzen im Ablauf des Algorithmus gebildet ist, denen jeweils Unterschlüssel (K', K'') zugeordnet sind, und dass die zusätzlichen Runden über ein Profil verfügen, das zu dem Profil der durch den Algorithmus definierten Runden analog ist, wodurch dieses wenigstens eine Paar zusätzlicher Runden nicht ermittelt werden kann.

7. Vorrichtung nach Anspruch 6,
**dadurch gekennzeichnet, dass** das Paar zusätzlicher Runden aus aufeinanderfolgenden Runden gebildet ist.

8. Vorrichtung nach Anspruch 6 oder 7,
**dadurch gekennzeichnet, dass** die zweite Runde die inverse Runde ($r^{-1}$) der ersten Runde (r) ist, und dass ihr ein Unterschlüssel (K') zugeordnet ist, der sich von dem Unterschlüssel (K) der ersten Runde unterscheidet, von dem Unterschlüssel (K) jedoch abhängt.

9. Vorrichtung nach Anspruch 8,
**dadurch gekennzeichnet, dass** die erste Runde involutorisch ist, und dass der Runde und ihrer Umkehrung der gleiche Unterschlüssel (K) zugeordnet ist.

10. Vorrichtung nach Anspruch 9,
**dadurch gekennzeichnet, dass** der Verschlüsselungsalgorithmus der iterative DES-Algorithmus ist, bestehend aus einer Permutation IP mit 16 aufeinanderfolgenden Runden und der Inversion der Permutation IP.

$d_i$

$\searrow i$ ← $K_i$

$d_{i+1}$

$\searrow i+1$ ← $K_{i+1}$

**FIG. 1A**

$d_i$

$\searrow i$ ← $K_i$

$d_{i+1}$

$r'$ ← $K'$

$r''$ ← $K''$

$d_{i+1}$

$i+1$ ← $K_{i+1}$

**FIG. 1B**

$\searrow i$ ← $K_i$

$r$ ← $K$

$r^{-1}$ ← $K'(K)$

$i+1$ ← $K_{i+1}$

**FIG. 2**

**FIG. 3A**

**FIG. 3B**